# EUROPEAN PATENT SPECIFICATION

(11) **EP 4 115 066 B1**
(45) Date of publication and mention of the grant of the patent: **07.02.2024**
(21) Application number: 20710852.3
(22) Date of filing: 05.03.2020
(51) Int. Cl.: F02C 7/08

(54) **RECUPERATOR FOR A GAS TURBINE ENGINE**
REKUPERATOR FÜR GASTURBINENTRIEBWERK
RÉCUPÉRATEUR POUR UN MOTEUR À TURBINE À GAZ

(43) Date of publication of application: 11.01.2023
(73) Proprietor: Bladon Jets Holdings Limited, Castletown IM9 1LA (IM)
(72) Inventor: HEWARD, Phillip, Warwick, CV34 6NG (GB); NIMMA, Vasudeva, Warwick, CV34 6NG (GB)
(74) Representative: Sach, Greg Robert
(86) International application number: PCT/EP2020/055850
(87) International publication number: WO 2021/175425

(56) References cited:
- US-A- 4 040 249
- US-A1- 2019 186 361
- US-B1- 6 357 113

## Description

### TECHNICAL FIELD

The subject matter disclosed herein relates generally to a recuperator for a gas turbine engine, and in particular a recuperator for a m icroturbine.

### BACKGROUND

Microturbines are gas turbines providing a maximum power output of up to 100 kilowatts and employing revolutions per minute ranging between 70,000 and 140,000 at maximum power.

Microturbines may be utilized in distributed energy resources and employ a compressor, combustor, turbine and electric generator to convert fuel into a local source of electric power. Their small footprint, high rotational speeds and high operating temperatures present significant design challenges.

A recuperator employs a counter-flow heat exchanger to recover heat from exhaust gas that is otherwise wasted. In the case of a gas turbine engine, providing the exhaust gas temperature exceeds the compressor outlet temperature, a recuperator can extract heat from the exhaust gas thereby to pre-heat air from the compressor outlet before mixing with fuel and further heating in the combustor. More specifically, the heat exchanger of the recuperator is arranged to provide a first flow path, into which exhaust gas from the turbine flows, and a second counter flow path, into which compressed air from the compressor flows, in such a way that heat transfer is facilitated from the first flow path to the second flow path. The pre-heated compressed air from the second flow path may then be passed on to the combustor for mixing with fuel and further heating and the cooled exhaust gas from the first flow path can be exhausted to the atmosphere. In this way recuperators can significantly increase the efficiency of a gas turbine, enabling greater extraction of useful energy from a given quantity of fuel.

The efficiency gain from the use of a recuperator is pronounced in the case of a microturbine given the relatively large temperature differential between the turbine and compressor outlets, and in this case efficiency may be doubled or more. This efficiency gain renders microturbines significantly more commercially attractive, and therefore innovation in this aspect of microturbines is undoubtedly instrumental to future widespread adoption of this technology.

A recuperator adds bulk to a gas turbine engine design. And yet in the case of a microturbine, there is a desire to maintain overall engine compactness. Prior art recuperator implementations offer unsatisfactory performance and add excessive bulk, particularly in the case of microturbine engines.

Prior art gas turbine engines with recuperator are disclosed in documents US2019/186361 A1, US4040249 A and US6357113 B1.

It is therefore desirable to provide a gas turbine engine recuperator offering improved efficiency whilst maintaining engine compactness, more or less necessitating a complete recuperator redesign.

### BRIEF DESCRIPTION OF THE DRAWINGS

Disclosed arrangements are further described hereinafter by way of example and with reference to the accompanying drawings, in which:
Fig. 1 depicts a first example of a gas turbine engine incorporating a recuperator;
Fig. 2 depicts a second example of a gas turbine engine incorporating a recuperator; and
Fig. 3 depicts a third example of a gas turbine engine incorporating a recuperator.

### DETAILED DESCRIPTION

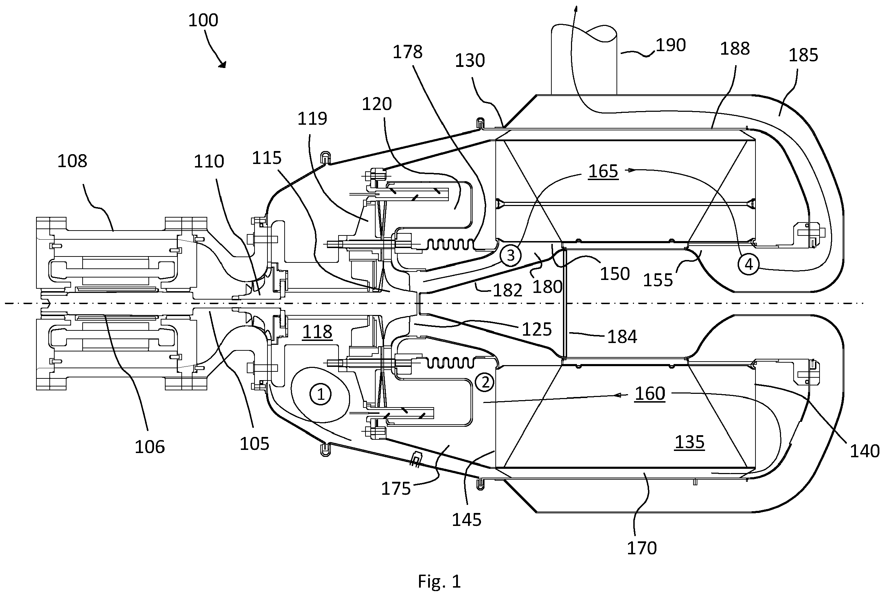

Fig. 1 depicts a first example of a gas turbine engine 100 comprising the recuperator 130 according to the present disclosure. The gas turbine engines depicted in the figures are microturbines providing a maximum power output of up to 100 kilowatts and employing revolutions per minute ranging between 70,000 and 140,000 at maximum power.

The gas turbine engine 100 comprises a rotor 105 mounted for rotation about an axis. The engine 100 is shown in cross section, but the skilled person will readily recognize that most of the components are substantially annular about the rotational axis of the rotor 105. This axis may be considered to define proximal and distal directions. According to the gas turbine engine 100 orientation in each of the figures of the present disclosure, the proximal direction extends to the left and distal extends to the right.

The gas turbine engine 100 comprises a proximally disposed compressor 110, e.g. a compressor wheel, and a distally disposed turbine 115, e.g. a turbine wheel, both of which are coupled to the rotor 105.

As shown in Fig. 1, the gas turbine engine 100 may comprise an electric generator 108 to convert rotational motion into electric power. The rotor 105 may be coupled to a magnetic rotor of the electric generator 108 that is proximally disposed from the compressor 110. For example, the rotor 105 may define or couple to a rotor core 106 of the magnetic rotor 106, which rotor core 106 may comprise one or more sockets arranged to receive one or more permanent magnets. Alternatively, the magnetic rotor may comprise a magnetic sleeve that extends around the rotor core 106.

Whilst the example shown in Fig. 1 employs an electric generator 108, it will be recognized that the electric generator 108 is optional and may be omitted depending upon the application of the gas turbine engine 100.

As shown in Fig. 1, the turbine 115 may, together with the rotor 105, form a monolithic component. As used herein a monolithic component is a continuous component formed or composed of material without discontinuous joints or seams, and may comprise a single material or may comprise more than one material. For example, two segments of the same material or two segments of different material may be welded together to provide a continuous joint, resulting in a monolithic component. Alternatively an additive or subtractive manufacturing process could be employed in order to form the monolithic component from a single material or from more than one material. In the example shown in Fig. 1, a monolithic component comprises the rotor core 106, rotor 105 and turbine 115, with the compressor 110 being coupled to the monolithic component. Other monolithic combinations are possible. For example, the rotor core 106, rotor 105, compressor 110 could form a monolithic component to which the turbine 115 is coupled. Thus the rotor 105 may form a monolithic component with one or more of the rotor core 106, compressor 110 and the turbine 115. The use of such a monolithic component dispenses with the requirement for a flexible coupling between the magnetic rotor in the vicinity of the electric generator and the power rotor in the vicinity of the compressor and turbine, which flexible couplings are fragile and prone to break. Such a monolithic component also facilitates increased reliability via reduction of failure modes.

Recuperator design focuses on optimizing heat flow, extracting as much exhaust heat as possible to feed back into the system, minimizing heat loss, and controlling the volumetric footprint. A significant factor affecting these design requirements is the overall flow path adopted by the recuperator. The inventors of the present disclosure have identified that prior art recuperator implementations, particularly those for use with small gas turbine engines such as microturbines, adopt a flow path that leads to excessive heat loss, loss of efficiency and, particularly in the case of microturbines, adds excessive and unacceptable bulk.

The inventors of the present disclosure have therefore redesigned the recuperator flow path to improve overall performance and reduce the footprint.

This modified flow path of the recuperator disclosed herein shall now be described with reference to the specific example of a gas turbine engine 100 comprising recuperator 130 depicted in Fig. 1.

To aid in understanding the flow path undertaken throughout the gas turbine engine 100 in Fig. 1, four sequential stages 1 to 4 are annotated by circled numbers corresponding with each stage.

### First Flow Path Stage

According to the first flow path stage, compressed air from the compressor 110 enters into first chamber 170. This chamber is in fluid communication with the bearing housing 118, turbine casing 119 and the radially outside surface of the heat exchanger 135. As shown in Fig. 1, the location of this first chamber 170 facilitates establishment of a toroidal vortex in the vicinity of the turbine casing 119, which facilitates picking up heat therefrom. The flow picks up further heat as it travels around the outside of the heat exchanger 135 and is directed to the axial intake 140 of the heat exchanger 135.

Thus, the first chamber 170 provides a flow path between the compressor 110 and the axial intake 140 of the heat exchanger 135.

The positioning of the flow path according to this first flow path stage facilitates a certain amount of heat extraction from the turbine casing 119, bearing housing 118 and heat exchanger 135.

The outside surface of the heat exchanger 135 may comprise one or more of surface roughening, ribs or fins to facilitate enhanced heat extraction.

In this first flow path stage, the air may be at a pressure of around 300 kPa (3 bar) and a temperature of 470K.

Air from the first flow path stage is then heated by the heat exchanger 135 between the axial intake 140 and the axial exhaust 145 of the heat exchanger 135 via a first heat exchanger flow path 160.

### Second Flow Path Stage

According to the second flow path stage, the heated air from the axial exhaust 145 of the heat exchanger 135 enters into the second chamber 175. This second chamber 175 is in fluid communication with bellows 178, which is arranged to reduce localized pressure variation. The flow is directed to the combustion chamber 120.

Thus, the second chamber 175 provides a flow path between the axial exhaust 145 of the heat exchanger 135 and the combustion chamber 120.

The air in this second flow path stage may be at a pressure of 300 kPa (3 bar) and a temperature of 900K, having been heated by the heat exchanger 145.

Air from the second flow path stage is then combined with fuel and combusted within the combustion chamber 120, and then passed through the turbine 115 thereby to drive the rotor 105, which rotation may then be exploited by the compressor 110, for compressing intake air for the gas turbine engine 100, and converted into electric power by the electric generator 108. Air in the combustor may be at a pressure of 3 bar and a temperature of 1200K.

### Third Flow Path Stage

According to the third flow path stage, exhaust gas from the turbine exhaust 125 enters into the third chamber 180. As shown in the example of Fig. 1, the third chamber 180 may be in fluid communication with a diffuser 182. The diffuser in this example is conically shaped, facilitating ease of manufacture, and may include insulation such as internal insulation and/or an insulation cap 184. This insulation prevents heat loss from the third chamber 180. The diffuser helps reduce the velocity of the exhaust gas.

In this example, the diffuser 182 is a radially inner surface defining the third chamber 180, which third chamber 180 can be seen to diverge in a distal direction between the turbine 115 and the radial intake 150 of the heat exchanger 135.

The exhaust gas is directed by the third chamber 180 to the radial intake 150 of the heat exchanger 135.

The exhaust gas in the third flow path stage may be at a pressure of around 100kPa (1 bar) and 970K.

Exhaust gas from the third flow path stage is then directed through a second heat exchanger flow path 165 spanning the radial intake 150 and radial exhaust 155 of the heat exchanger 135, the heat exchanger 135 arranged to facilitate heat transfer from the second heat exchanger flow path 165 to the first heat exchanger flow path 160.

### Fourth Flow Path Stage

According to the fourth flow path stage, cooled exhaust gas exiting the radial exhaust 155 of the heat exchanger 135 enters into a fourth chamber 185 and is directed to an exhaust 190 of the gas turbine engine 100.

This fourth flow path stage is optional in the sense that exhaust gas could instead be exhausted directly from the heat exchanger 135.

In the specific example of Fig. 1, the fourth chamber 185 comprises a portion that extends around a distal end of the gas turbine engine 100. Thus the fourth chamber 185 comprises a first portion that extends in a distal direction from the radial exhaust 155 of the heat exchanger 135 and continues to a second portion that extends in a proximal direction from the distal end of the gas turbine engine 100 and overlaps a portion of the first chamber 170 that is radially outside the heat exchanger 135.

Thus the fourth chamber 185 may comprise a region surrounding a distal portion of the first chamber 170 thereby to define an interface 188 between the first chamber 170 and the fourth chamber 185, and this interface may comprise a portion disposed radially outside the heat exchanger and axially between the distal and proximal ends of the heat exchanger, this interface spanning at least half of the axial length of the heat exchanger. In this way air within the first chamber 170 is sandwiched between the radially outside surface of the heat exchanger and the cooled exhaust gas in the fourth chamber 185, facilitating further useful heat gain in the first flow path, radially inwards from the fourth chamber 185 and radially outwards from the heat exchanger 135.

The interface 188 may comprise surface one or more of surface roughening, ribs, fins or other means to increase the surface area and heat exchange potential, on the side in fluid communication with the fourth chamber 185, thereby to facilitate still greater extraction of heat from the cooled exhaust gas, which additional heat is otherwise lost.

The exhaust gas in the fourth flow path stage may be at a pressure of around 100kPa (1 bar) and 550 K.

### Heat Exchanger

As can be seen from the example shown Fig. 1, the recuperator 130 disclosed herein comprises a heat exchanger 135 arranged to establish two flow paths, a first flow path 165 between an axial intake 140 and an axial exhaust 145, through which (relatively cool) air from the compressor flows, and a second flow path 165 between a radial intake 150 and a radial exhaust 155, through which (relatively hot) exhaust gas from the turbine flows. Whilst the heat exchanger 135 is arranged such that the first and second flow paths are not in fluid communication, the heat exchanger 135 is arranged to facilitate heat transfer from the second flow path 165 to the first flow path 160. As in the example shown in Fig. 1, it is preferable that the first 160 and second 165 flow paths generally flow in opposite directions, i.e. the heat exchanger 135 is a counter flow heat exchanger, since this facilitates optimal heat transfer by virtue of an overall increased temperature differential across the heat exchange path.

Insulative material may be provided radially inside the third chamber 180 and/or radially inside the heat exchanger 135. Such insulation facilitates reducing unwanted heat transfer in a distal direction between the hot turbine exhaust gas in the third chamber and the cooled exhaust gas in the fourth chamber, i.e. preventing a short circuit that bypasses the heat exchanger 135. For example, a heat insulation cap 184 may be provided. Alternatively substantially the entire region radially inside the heat exchanger 135 and between the third and fourth chambers may be filled with insulative material.

### Modified Exhaust

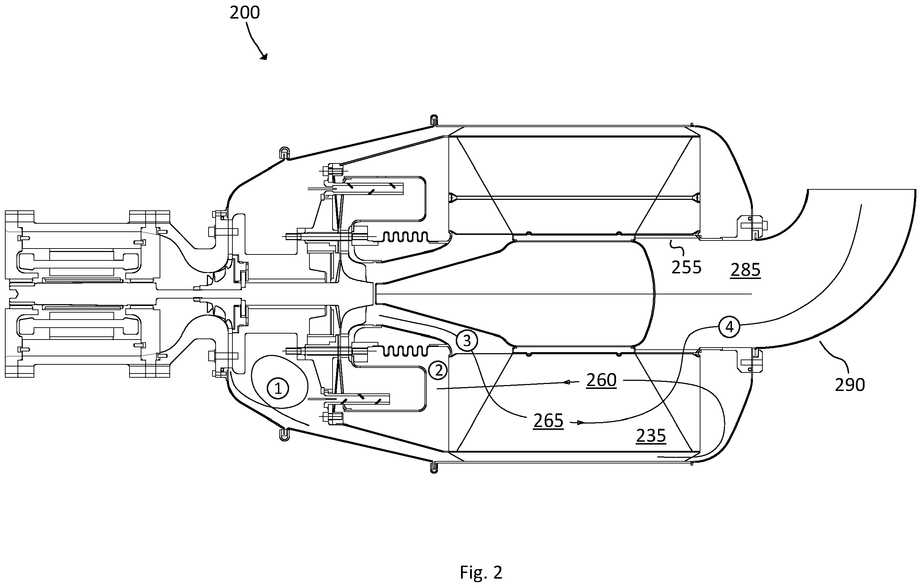

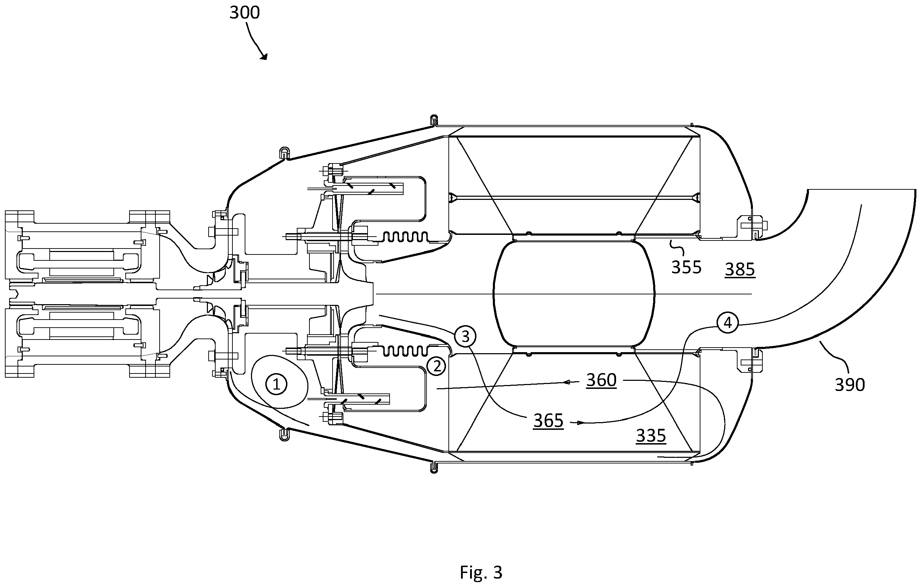

In the second and third examples shown in Figs. 2 and 3, the gas turbine engines 200 and 300 comprise recuperators according to the first example described above, except in that the fourth chambers 285, 385 thereof extend from the radial exhausts 255, 355 to gas turbine exhausts 290, 390 that are disposed proximate the radial exhausts 255, 355. That is to say, in these examples, the fourth chambers 285, 385 do not extend around the distal ends of the gas turbine engines 200, 300 and thus the fourth chambers 285, 385 extend a shorter distance, reducing the bulk of the gas turbine engines 200, 300.

In the example shown in Fig. 3, the diffuser proximate the third chamber 180 has been omitted.

One or more of the recuperator, first to fourth chambers, heat exchanger may be annular and coaxial with the axis of the rotor 105.

As shown in the examples of Figs. 1 to 3, the heat exchanger 135 may be disposed distally from the compressor 110 and/or the turbine 125.

It will be recognized that the examples disclosed herein are not limiting and are capable of numerous modifications and substitutions.

## Claims

1. A gas turbine engine (100), comprising:
a rotor (105) mounted for rotation about an axis defining proximal and distal directions;
a compressor (110) coupled to the rotor;
a turbine (115) coupled to the rotor and disposed distally from the compressor;
a combustion chamber (120);
a gas turbine exhaust (190); and
a recuperator (130) comprising: an annular heat exchanger (135) comprising: an axial intake (140) disposed at a distal end of the heat exchanger and an axial exhaust (145) disposed at a proximal end of the heat exchanger; and a radial intake (150) disposed at a proximal end of an inner radius of the heat exchanger and a radial exhaust (155) disposed at a distal end of the inner radius of the heat exchanger, wherein the heat exchanger defines a first flow path (160) between the axial intake and the axial exhaust and a second flow path (165) between the radial intake and the radial exhaust;
a first chamber (170) comprising a region disposed radially outside the heat exchanger and providing a flow path between the compressor and the axial intake of the heat exchanger;
a second chamber (175) providing a flow path between the axial exhaust of the heat exchanger and the combustion chamber;
a third chamber (180) providing a flow path between the turbine and the radial intake of the heat exchanger; and
a fourth chamber (185) providing a flow path between the radial exhaust of the heat exchanger and the gas turbine exhaust.

2. The gas turbine engine according to claim 1, wherein:
the fourth chamber comprises a region surrounding a distal portion of the first chamber thereby to define an interface between the first chamber and the fourth chamber.

3. The gas turbine engine according to claim 2, wherein:
the interface comprises a portion disposed radially outside the heat exchanger and axially between distal and proximal ends of the heat exchanger.

4. The gas turbine engine according to claim 3, wherein:
the interface spans at least half of the axial length of the heat exchanger.

5. The gas turbine engine according to any one of claims 2 to 4, wherein:
the interface comprises a side in fluid communication with the fourth chamber that is rougher than an opposite side in fluid communication with the first chamber.

6. The gas turbine engine according to any one of claims 2 to 5, wherein:
the interface comprises one or more of surface roughening, ribs and/or fins in fluid communication with the fourth chamber.

7. The gas turbine engine according to any preceding claim, comprising:
bearing housing supporting the rotor between the compressor and the turbine; and
turbine casing that is coupled to the bearing housing, wherein:
the proximal end of the first chamber is in fluid communication with the bearing housing and the turbine casing.

8. The gas turbine engine according to any preceding claim, wherein:
the third chamber radially diverges in a distal direction between the turbine and the radial intake of the heat exchanger.

9. The gas turbine engine according to claim 8, wherein:
the divergence defines a substantially frustoconical surface.

10. The gas turbine engine according to any preceding claim, comprising:
insulative material disposed between the third and fourth chambers.

11. The gas turbine engine according to claim 10, wherein:
at least a portion of the insulative material is disposed radially inside the third chamber.

12. The gas turbine engine according to any preceding claim, comprising:
an insulation cap disposed radially inside the heat exchanger arranged to prevent heat transfer in a distal direction.

13. The gas turbine engine according to claim 12, wherein:
the insulation cap is disposed proximate to the distal end of the radial intake of the heat exchanger.

14. The gas turbine engine according to any preceding claim, wherein:
the rotor and the turbine are part of a monolithic component.

15. The gas turbine engine according to claim 14, wherein:
the compressor is part of the monolithic component.

## Patentansprüche

1. Gasturbinentriebwerk (100), aufweisend:
einen Rotor (105), der zur Drehung um eine Achse angebracht ist, die die proximale und distale Richtung definiert;
einen mit dem Rotor gekoppelten Kompressor (110);
eine Turbine (115), die mit dem Rotor gekoppelt und distal vom Kompressor angeordnet ist;
eine Brennkammer (120);
ein Gasturbinenauslass (190); und
einen Rekuperator (130), aufweisend:
einen ringförmigen Wärmetauscher (135), der aufweist: einen axialen Einlass (140), der an einem distalen Ende des Wärmetauschers angeordnet ist, und einen axialen Auslass (145), der an einem proximalen Ende des Wärmetauschers angeordnet ist; und einen radialen Einlass (150), der an einem proximalen Ende eines inneren Radius des Wärmetauschers angeordnet ist, und einen radialen Auslass (155), der an einem distalen Ende des inneren Radius des Wärmetauschers angeordnet ist, wobei der Wärmetauscher einen ersten Strömungsweg (160) zwischen dem axialen Einlass und dem axialen Auslass und einen zweiten Strömungsweg (165) zwischen dem radialen Einlass und dem radialen Auslass definiert;
eine erste Kammer (170), die einen Bereich aufweist, der radial außerhalb des Wärmetauschers angeordnet ist und einen Strömungsweg zwischen dem Kompressor und dem axialen Einlass des Wärmetauschers bildet;
eine zweite Kammer (175), die einen Strömungsweg zwischen dem axialen Auslass des Wärmetauschers und der Brennkammer bildet;
eine dritte Kammer (180), die einen Strömungsweg zwischen der Turbine und dem radialen Einlass des Wärmetauschers bildet; und
eine vierte Kammer (185), die einen Strömungsweg zwischen dem radialen Auslass des Wärmetauschers und dem Gasturbinenauslass bildet.

2. Gasturbinentriebwerk nach Anspruch 1, wobei:
die vierte Kammer einen Bereich aufweist, der einen distalen Teil der ersten Kammer umgibt, um dadurch eine Grenzfläche zwischen der ersten Kammer und der vierten Kammer zu bilden.

3. Gasturbinentriebwerk nach Anspruch 2, wobei:
die Grenzfläche einen Teil aufweist, der radial außerhalb des Wärmetauschers und axial zwischen dem distalen und dem proximalen Ende des Wärmetauschers angeordnet ist.

4. Gasturbinentriebwerk nach Anspruch 3, wobei:
die Grenzfläche sich über mindestens die Hälfte der axialen Länge des Wärmetauschers erstreckt.

5. Gasturbinentriebwerk nach einem der Ansprüche 2 bis 4, wobei:
die Grenzfläche eine Seite in Fluidverbindung mit der vierten Kammer aufweist, die rauer ist als eine gegenüberliegende Seite in Fluidverbindung mit der ersten Kammer.

6. Gasturbinentriebwerk nach einem der Ansprüche 2 bis 5, wobei:
die Grenzfläche eine oder mehrere aufgeraute Oberflächen, Rippen und/oder Lamellen in Fluidverbindung mit der vierten Kammer aufweist.

7. Gasturbinentriebwerk nach einem der vorhergehenden Ansprüche, aufweisend:
Lagergehäuse, das den Rotor zwischen dem Kompressor und der Turbine trägt; und
Turbinengehäuse, das mit dem Lagergehäuse gekoppelt ist, wobei:
das proximale Ende der ersten Kammer in Fluidverbindung mit dem Lagergehäuse und dem Turbinengehäuse steht.

8. Gasturbinentriebwerk nach einem der vorhergehenden Ansprüche, wobei:
die dritte Kammer radial in distaler Richtung zwischen der Turbine und dem radialen Einlass des Wärmetauschers divergiert.

9. Gasturbinentriebwerk nach Anspruch 8, wobei:
die Divergenz eine im Wesentlichen kegelstumpfförmige Oberfläche definiert.

10. Gasturbinentriebwerk nach einem der vorhergehenden Ansprüche, aufweisend:
Isoliermaterial, das zwischen der dritten und vierten Kammer angeordnet ist.

11. Gasturbinentriebwerk nach Anspruch 10, wobei:
mindestens ein Teil des Isoliermaterials radial innerhalb der dritten Kammer angeordnet ist.

12. Gasturbinentriebwerk nach einem der vorhergehenden Ansprüche, aufweisend:
eine Isolierkappe, die radial innerhalb des Wärmetauschers angeordnet ist, um die Wärmeübertragung in distaler Richtung zu verhindern.

13. Gasturbinentriebwerk nach Anspruch 12, wobei:
die Isolierkappe in der Nähe des distalen Endes des radialen Einlasses des Wärmetauschers angeordnet ist.

14. Gasturbinentriebwerk nach einem der vorhergehenden Ansprüche, wobei:
der Rotor und die Turbine Teil eines monolithischen Bestandteils sind.

15. Gasturbinentriebwerk nach Anspruch 14, wobei:
der Kompressor Teil des monolithischen Bestandteils ist.

## Revendications

1. Moteur à turbine à gaz (100), comprenant :
un rotor (105) monté pour une rotation autour d'un axe définissant des directions proximale et distale ;
un compresseur (110) couplé au rotor ;
une turbine (115) couplée au rotor et disposée de manière distale par rapport au compresseur ;
une chambre de combustion (120) ;
un échappement de turbine à gaz (190) ; et
un récupérateur (130) comprenant :
un échangeur de chaleur annulaire (135) comprenant : une admission axiale (140) disposée à une extrémité distale de l'échangeur de chaleur et un échappement axial (145) disposé à une extrémité proximale de l'échangeur de chaleur ; et une admission radiale (150) disposée à une extrémité proximale d'un rayon interne de l'échangeur de chaleur et un échappement radial (155) disposé à une extrémité distale du rayon interne de l'échangeur de chaleur, dans lequel l'échangeur de chaleur définit un premier passage d'écoulement (160) entre l'admission axiale et l'échappement axial et un deuxième passage d'écoulement (165) entre l'admission radiale et l'échappement radial ;
une première chambre (170) comprenant une région disposée radialement à l'extérieur de l'échangeur de chaleur et fournissant un passage d'écoulement entre le compresseur et l'admission axiale de l'échangeur de chaleur ;
une deuxième chambre (175) fournissant un passage d'écoulement entre l'échappement axial de l'échangeur de chaleur et la chambre de combustion ;
une troisième chambre (180) fournissant un passage d'écoulement entre la turbine et l'admission radiale de l'échangeur de chaleur ; et
une quatrième chambre (185) fournissant un passage d'écoulement entre l'échappement radial de l'échangeur de chaleur et l'échappement de turbine à gaz.

2. Moteur à turbine à gaz selon la revendication 1, dans lequel :
la quatrième chambre comprend une région encerclant une partie distale de la première chambre pour définir ainsi une interface entre la première chambre et la quatrième chambre.

3. Moteur à turbine à gaz selon la revendication 2, dans lequel :
l'interface comprend une partie disposée radialement à l'extérieur de l'échangeur de chaleur et axialement entre les extrémités distale et proximale de l'échangeur de chaleur.

4. Moteur à turbine à gaz selon la revendication 3, dans lequel :
l'interface s'étend sur au moins la moitié de la longueur axiale de l'échangeur de chaleur.

5. Moteur à turbine à gaz selon l'une quelconque des revendications 2 à 4, dans lequel :
l'interface comprend un côté en communication fluidique avec la quatrième chambre qui est plus rugueux qu'un côté opposé en communication fluidique avec la première chambre.

6. Moteur à turbine à gaz selon l'une quelconque des revendications 2 à 5, dans lequel :
l'interface comprend l'un ou plusieurs parmi une rugosité de surface, des nervures et/ou des ailettes en communication fluidique avec la quatrième chambre.

7. Moteur à turbine à gaz selon une quelconque revendication précédente, comprenant :
un logement de palier portant le rotor entre le compresseur et la turbine ; et
un carter de turbine qui est couplé au logement de palier, dans lequel :
l'extrémité proximale de la première chambre est en communication fluidique avec le logement de palier et le carter de turbine.

8. Moteur à turbine à gaz selon une quelconque revendication précédente, dans lequel :
la troisième chambre diverge radialement dans une direction distale entre la turbine et l'admission radiale de l'échangeur de chaleur.

9. Moteur à turbine à gaz selon la revendication 8, dans lequel :
la divergence définit une surface sensiblement tronconique.

10. Moteur à turbine à gaz selon une quelconque revendication précédente, comprenant :
un matériau isolant disposé entre les troisième et quatrième chambres.

11. Moteur à turbine à gaz selon la revendication 10, dans lequel :
au moins une partie du matériau isolant est disposée radialement à l'intérieur de la troisième chambre.

12. Moteur à turbine à gaz selon une quelconque revendication précédente, comprenant :
un capuchon d'isolation disposé radialement à l'intérieur de l'échangeur de chaleur, agencé pour empêcher un transfert de chaleur dans une direction distale.

13. Moteur à turbine à gaz selon la revendication 12, dans lequel :
le capuchon d'isolation est disposé à proximité de l'extrémité distale de l'admission radiale de l'échangeur de chaleur.

14. Moteur à turbine à gaz selon une quelconque revendication précédente, dans lequel :
le rotor et la turbine font partie d'un composant monolithique.

15. Moteur à turbine à gaz selon la revendication 14, dans lequel :
le compresseur fait partie du composant monolithique.
